# FASCICULE DE BREVET EUROPEEN

(11) **EP 0 947 754 B1**
(45) Date de publication et mention de la délivrance du brevet: **06.06.2001**
(21) Numéro de dépôt: 99810253.7
(22) Date de dépôt: 22.03.1999
(51) Int. Cl.: F16K 31/06

(54) **Valve hydraulique à commande électromagnétique pulsée**
Impulsgesteuertes, elektromagnetisches Hydraulikventil
Pulse-controlled electromagnetic hydraulic valve

(30) Priorité: 30.03.1998 CH 77698
(43) Date de publication de la demande: 06.10.1999
(73) Titulaire: PARKER LUCIFER SA, 1227 Carouge (Genève) (CH)
(72) Inventeur: Livet, Jean, 1209 Genève (CH)
(74) Mandataire: Meylan, Robert Maurice

(56) Documents cités:
- DE-A- 3 909 551
- GB-A- 868 896
- US-A- 4 917 150

## Description

La présente invention a pour objet une valve hydraulique à commande électromagnétique pulsée comprenant un corps de valve contenant une bobine entourant un noyau fixe et une chambre cylindrique dans laquelle est monté un noyau mobile présentant un conduit axial et déplaçable, contre l'action d'un ressort, par le champ magnétique pulsé produit par la bobine, ladite valve présentant au moins un conduit d'entrée, un conduit de sortie et au moins un conduit d'échappement, le conduit de sortie communiquant en permanence avec le conduit axial du noyau mobile, tandis que la communication entre le conduit d'échappement et le conduit axial du noyau mobile est fermée par le noyau mobile lorsque la valve est ouverte et inversement, le conduit d'échappement communiquant avec le conduit axial du noyau mobile par au moins un orifice d'échappement situé dans la paroi de la chambre cylindrique, cet orifice d'échappement étant alternativement ouvert et fermé par le noyau mobile travaillant en tiroir.

Une telle valve, mais non prévue pour être commandée de manière pulsée, est connue de la demande de brevet DE 39 09 551.

Le corps de cette valve comprend un alésage cylindrique dans lequel est monté un noyau mobile présentant un conduit axial, un conduit d'entrée, un conduit de sortie et deux conduits d'échappement. Le conduit de sortie communique en permanence avec le conduit axial du noyau mobile, tandis que la communication entre le conduit d'échappement et le conduit axial du noyau mobile est fermée par le noyau mobile lorsque la valve est ouverte et inversement. Les conduits d'échappement communiquent avec le conduit axial du noyau mobile par des orifices prévus dans la paroi de l'alésage, ces orifices d'échappement étant alternativement ouverts et fermés par le noyau mobile travaillant en tiroir. Cette construction a pour but d'assurer un équilibre des pressions de manière à empêcher la pénétration de particules

Une valve du même type, mais dans laquelle le conduit d'échappement ne communique pas avec le conduit axial du noyau, est connue, notamment, du brevet EP 0 681 129 et du modèle d'utilité DE 93 14 162, ce dernier montrant en outre son utilisation dans un dispositif d'alimentation d'un brûleur à huile de chauffage. La commande pulsée d'une telle valve par des impulsions sensiblement rectangulaires modulées en largeur permet de contrôler le débit de fluide émis par une buse associée à la valve. Cette valve est munie d'un clapet d'entrée constitué par l'une des extrémités du noyau mobile et d'un clapet d'échappement formé par l'autre extrémité du noyau mobile, ce clapet d'échappement étant relié à une sortie d'échappement permettant à la pression dans le conduit de sortie de retomber entre chaque ouverture du clapet d'entrée. Lors de chaque fermeture du clapet d'entrée, la pression dans le conduit de sortie chute brusquement, ce qui provoque un effet connu sous le nom de "coup de bélier". Les coups de bélier répétés à la fréquence des impulsions, soit 50 à 100 Hz, sont perçus comme un martèlement bruyant et fort gênant. La brusque dépression dans le conduit de sortie a également un effet de cavitation. Enfin, la dépression a pour effet de créer un appel d'air qui forme des bulles dans le conduit de sortie, bulles qui se traduisent par des perturbations dans le fonctionnement du gicleur (par exemple crachement, suintement, une formation de mousse). La qualité de la pulvérisation du fluide est donc perturbée. Le conduit de sortie est certes relié à l'orifice d'échappement lorsque le clapet principal se ferme, mais le clapet principal et le clapet d'échappement étant constitués par le même noyau mobile, le clapet d'échappement s'ouvre et se ferme aussi brusquement que le clapet principal, de telle sorte que l'échappement a peu d'effet sur les coups de bélier.

La présente invention a pour but de réduire, voire de supprimer, l'effet de coups de bélier et le bruit d'obturation, par des moyens peu coûteux.

La vanne hydraulique selon l'invention est caractérisée en ce qu'elle comprend deux orifices d'échappement angulairement distants d'un angle inférieur à 90°, de préférence compris entre 15 et 30°.

La réduction du bruit de la valve est obtenue par l'ouverture et la fermeture progressives de l'orifice d'échappement. Les deux orifices d'échappement sont situés d'un même côté de la chambre de telle sorte que le déséquilibre transversal ainsi créé a pour effet de plaquer le noyau mobile contre la paroi de la chambre présentant l'orifice, respectivement les orifices d'échappement. Ceci permet d'augmenter les tolérances de fabrication en ce qui concerne le diamètre du noyau mobile et celui de la chambre. Le seul fait de faire travailler le noyau mobile en tiroir pour l'orifice d'échappement permet déjà d'augmenter les tolérances de fabrication en ce qui concerne la dimension de l'orifice d'échappement et son positionnement relativement au clapet. En pratique, cela revient à travailler avec une précision au 1/100 au lieu du micron, ce qui représente une réduction sensible des coûts de fabrication.

La chambre est avantageusement constituée d'un tube cylindrique pincé entre le noyau fixe et un flasque de fermeture du corps de valve, comme dans le brevet EP 0 681 129.

Le dessin annexé représente, à titre d'exemple, une forme d'exécution de la valve selon l'invention.

La figure 1 en représente une vue en coupe axiale au repos, en position fermée.

La figure 1a est une vue de détail et en coupe selon la-la de la figure 1.

La figure 2 est une vue analogue montrant la valve en position ouverte.

La figure 3 est une vue de détail représentant le noyau en position fermée.

La figure 4 est une vue en coupe selon IV-IV de la figure 3.

La figure 5 est une vue analogue à la figure 3 représentant le noyau en position ouverte.

La figure 6 est une vue en coupe selon VI-VI de la figure 4.

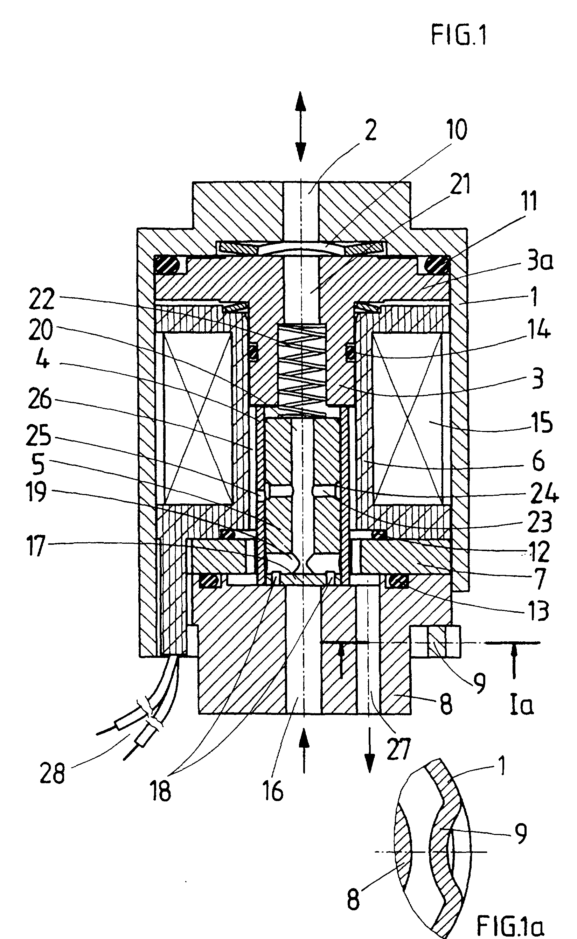

La valve hydraulique représentée à la figure 1 comprend un corps de valve 1 en forme de pot en matériau ferromagnétique dont le fond est percé d'un conduit 2 constituant l'orifice de sortie de la valve. Dans ce corps 1 est monté un empilage constitué, à partir du fond du corps 1, d'un noyau fixe 3 muni d'un flasque 3a, d'une chambre cylindrique tubulaire 4 contenant un noyau mobile 5, d'un corps de bobine 6 en matériau isolant entourant le noyau fixe 3 et le noyau mobile 5, d'une plaque polaire 7 en matériau ferromagnétique et d'une pièce de fermeture 8, cet empilage étant maintenu en trois points par saignée de la paroi cylindrique du corps 1 et repoussage 9 de la matière vers l'intérieur comme représenté à la figure la. La chambre tubulaire 4 est maintenue pincée entre le noyau fixe 3 et le corps de fermeture 8 par un ressort 10 disposé au fond du corps 1. Des garnitures d'étanchéité 11, 12, 13, 14 assurent l'étanchéité en tous points où cela est nécessaire. Le corps 1, le flasque 3a et la plaque polaire 7 forment une culasse ferromagnétique entourant la bobine 15.

Le corps de fermeture 8 présente un conduit axial d'entrée 16 débouchant dans la chambre tubulaire 4. Sa face intérieure constitue un siège de clapet pour le clapet 17 formé par l'extrémité inférieure du noyau mobile 5. Ce clapet présence un passage annulaire 18 concentrique à l'axe du noyau mobile, ce passage débouchant dans des canaux radiaux 19 du noyau mobile communiquant avec un conduit axial 20 traversant le noyau mobile et débouchant dans un passage axial 21 du noyau fixe 3 dont la partie inférieure, d'un diamètre un peu plus grand, contient un ressort 22 tendant à maintenir le noyau mobile 5 contre la pièce 8, c'est-à-dire la valve en position fermée. Le noyau mobile 5 présente en outre, à mi-hauteur, un conduit diamétral 23 débouchant dans une gorge périphérique 24. La paroi de la chambre tubulaire 4 présente deux trous 25 angulairement distants de 30° environ et communiquant avec la gorge 24 lorsque la valve est au repos, c'est-à-dire fermée. Autour de la chambre tubulaire 4, un espace 26 forme une chambre périphérique qui communique avec un conduit d'échappement 27. On distingue en outre les fils 28 d'alimentation de la bobine 15.

Lors de son utilisation, l'entrée 16 de la valve est en général reliée à une pompe et sa sortie 2 à un gicleur, tandis que son conduit d'échappement 27 est relié au réservoir de fluide. La bobine 15 est excitée par un générateur d'impulsions modulables en largeur.

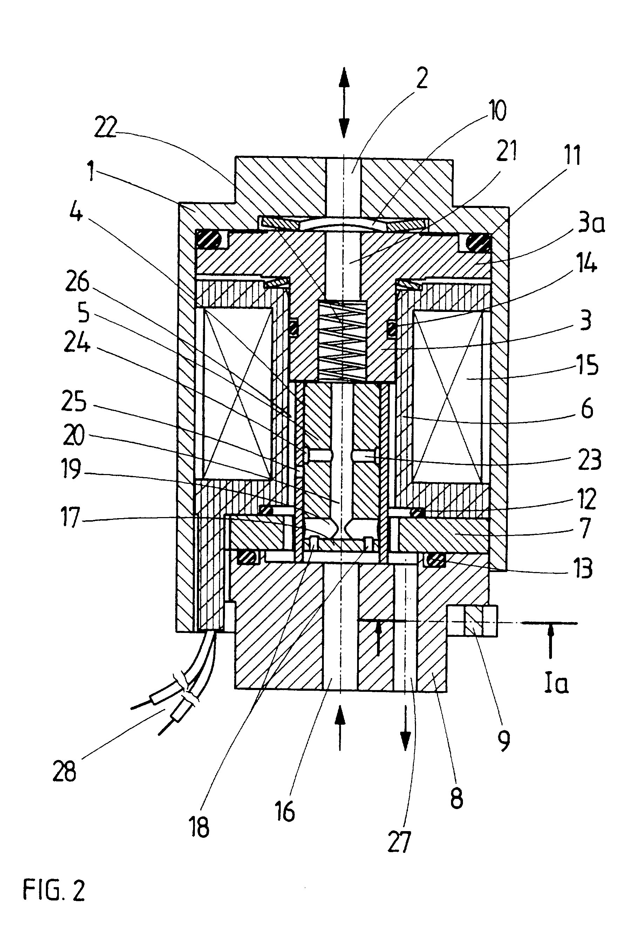

On voit que dans la position ouverte de la valve, représentée à la figure 2, les orifices d'échappement 25 sont fermés par le noyau mobile 5. Lorsque la valve se referme, le conduit de sortie 2 vient en communication avec les orifices d'échappement 25 comme ceci apparaît à la figure 1.

La construction représentée présente deux avantages importants.

Le premier avantage réside dans une ouverture et une fermeture progressives de l'échappement. La progression de l'ouverture est en outre double en raison de la forme généralement circulaire des trous d'échappement 25. En effet, la section de l'ouverture et de la fermeture augmente de façon non linéaire, ce qui s'est avéré favorable.

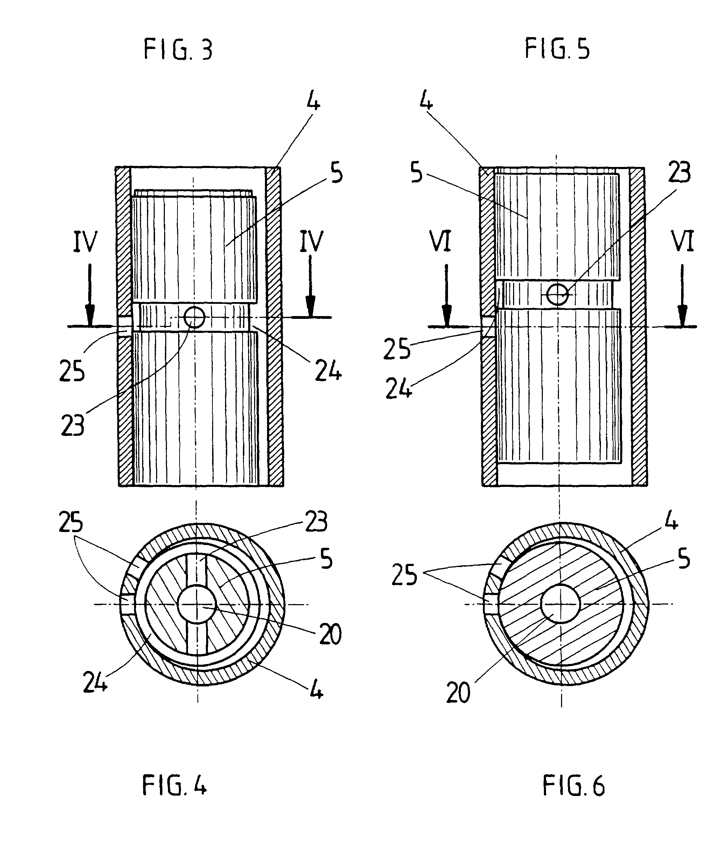

Le second avantage ressort des figures 3 à 6. Il résulte de la disposition des trous d'échappement 25 d'un seul côté du tube 4. La dépression localisée créée par les trous 25 par rapport à la pression à l'intérieur du tube 4 a pour effet de plaquer radialement le noyau 5 contre la partie de la paroi du tube 4 présentant les trous 25. Le diamètre du noyau mobile 5 peut par conséquent présenter une grande tolérance, par défaut, par rapport au diamètre intérieur du tube 4, comme ceci est représenté de manière fortement exagérée aux figures 3 à 6. Or, de grandes tolérances signifient un coût réduit de fabrication.

## Revendications

1. Valve hydraulique à commande électromagnétique pulsée, comprenant un corps de valve (1) contenant une bobine (15) entourant un noyau fixe (3) et une chambre cylindrique (4) dans laquelle est monté un noyau mobile (5) présentant un conduit axial (20) et déplaçable, contre l'action d'un ressort (22), par le champ magnétique pulsé produit par la bobine, ladite valve présentant au moins un conduit d'entrée (16), un conduit de sortie (2) et au moins un conduit d'échappement (27), le conduit de sortie (2) communiquant en permanence avec le conduit axial (20) du noyau mobile, tandis que la communication entre le conduit d'échappement (27) et le conduit axial du noyau mobile est fermée par le noyau mobile lorsque la valve est ouverte et inversement , le conduit d'échappement (27) communiquant avec le conduit axial (20) du noyau mobile par au moins un orifice d'échappement (25) situé dans la paroi de la chambre cylindrique (4), cet orifice d'échappement étant alternativement ouvert et fermé par le noyau mobile (5) travaillant en tiroir, caractérisée en ce qu'elle comprend deux orifices d'échappement (25) angulairement distants d'un angle inférieur à 90°, de préférence compris entre 15 et 30°.

2. Valve selon la revendication 1, caractérisée en ce que la chambre est formée par un tube cylindrique (4) pincé entre le noyau fixe (3) et un flasque (8), ce tube étant monté dans le corps de valve de manière à former, autour dudit tube, une chambre annulaire (26) communiquant avec un conduit d'échappement (27).

## Claims

1. Hydraulic valve with pulsed electromagnetic control, comprising a valve body (1) containing a coil (15) surrounding a fixed core (3) and a cylindrical chamber (4) in which is mounted a mobile core (5) having an axial passage (20) and displaceable, against the action of a spring (22), by the pulsed magnetic field produced by the coil, said valve having at least one inlet passage (16), an outlet passage (2) and at least one release passage (27), the outlet passage (2) permanently communicating with the axial passage (20) of the mobile core, while the communication between the release passage (27) and the axial passage of the mobile core is closed by the mobile core when the valve is open and vice versa, the release passage (27) communicating with the axial passage (20) of the mobile core by at least one release port (25) situated in the wall of the cylindrical chamber (4), this release port being alternatively opened and closed by the mobile core (5) acting as a slide valve, characterized in that the valve comprises two release ports (25) angularly spaced at an angle of less than 90°, preferably of between 15 and 30°.

2. Valve as claimed in claim 1, characterized in that the chamber is formed by a cylindrical tube (4) clamped between the fixed core (3) and a flange (8), this tube being mounted in the valve body so as to form, around said tube, an annular chamber (26) communicating with a release passage (27).

## Patentansprüche

1. Durch elektromagnetische Impulse gesteuertes Hydraulikventil mit einem Ventilkörper (1), der eine einen festen Kern (3) umgebende Spule (15) und eine zylindrische Kammer (4) enthält, in welche ein mit einer axialen Leitung (20) versehener beweglicher Kern (5) montiert ist, der gegen die Wirkung einer Feder (22) durch das gepulste magnetische Feld verschiebbar ist, wobei das erwähnte Ventil wenigstens eine Eingangsleitung (16), eine Ausgangsleitung (2) und wenigstens eine Auslassleitung (27) aufweist und die Ausgangsleitung (2) ständig mit der axialen Leitung (20) des beweglichen Kerns in Verbindung steht, während die Verbindung zwischen der Auslassleitung (27) und der axialen Leitung des beweglichen Kerns durch den beweglichen Kern verschlossen ist, wenn das Ventil offen ist und umgekehrt, und wobei die Auslassleitung (27) mit der axialen Leitung (20) des beweglichen Kerns über mindestens eine Auslassöffnung (25) in der Wand der zylindrischen Kammer (4) in Verbindung steht und diese Auslassöffnung abwechselnd durch den als Steuerschieber arbeitenden beweglichen Kern geöffnet und geschlossen wird, dadurch gekennzeichnet, dass die Wand der zylindrischen Kammer zwei Auslassöffnungen (25) aufweist, die winkelmässig einen Abstand voneinander haben, der kleiner als 90°, vorzugsweise 15° bis 30°, beträgt.

2. Ventil nach Anspruch 1,, dadurch gekennzeichnet, dass die Kammer von einem zylindrischen Rohr (4) gebildet wird, welches zwischen dem festen Kern (3) und einem Flansch (8) eingeklemmt und im Ventilkörper derart montiert ist, dass um das erwähnte Rohr herum eine ringförmige Kammer (26) gebildet wird, welche mit einer Auslassleitung (27) in Verbindung steht.
